# EUROPEAN PATENT APPLICATION

(11) **EP 2 843 452 A1**
(43) Date of publication of application: **04.03.2015**
(21) Application number: 14182734.5
(22) Date of filing: 28.08.2014
(51) Int. Cl.: G02B 6/44, G02B 6/38

(54) **Fiber-to-the-antenna systems and fiber optic demarcation units**

(30) Priority: 29.08.2013 US 201314013614
(71) Applicant: Opterna Technology Limiited, Limerick (IE)
(72) Inventor: Haile-Mariam, Atikem, Alexandria, VA 22311 (US); Vora, K. Ravindra, Freehold, NJ New Jersey 07728 (US); Sarasan, Benoy, 682 037 Cochin (IN); Mohammedali, M. Beevi, 682 037 Cochin (IN); Ashwin, P.V., 682 037 Cochin (IN)
(74) Representative: Lam, Alvin

(57) **Abstract**

A fiber-to-the-antenna (FTTA) system includes a multi-fiber cable configured to be operatively coupled to fiber optic equipment on the ground, and a fiber optic demarcation unit comprising an adapter optically coupled to the multi-fiber cable. The FTTA system also includes a multi-fiber jumper cable comprising a push-pull connector at one end configured to optically couple to a respective adapter of the fiber optic demarcation unit. Additionally, the FTTA system includes a remote radio head optically coupled to one of the plurality of ports of the fiber optic demarcation unit. The fiber optic demarcation unit can include a strain relief device attached to a housing of the unit and to the multi-fiber cable such that a load of the multi-fiber cable is transferred from an interface between the multi-fiber cable and the housing of the fiber optic demarcation unit.

## Description

### FIELD

The present invention relates to fiber optic demarcation units and, more particularly, to fiber optic demarcation units for use in fiber-to-the-antenna (FTTA) systems.

### BACKGROUND

Radio networks use radio transceivers elevated by radio towers to broadcast or receive radio signals. Conventionally, coaxial cable operatively couples the radio transceiver to communication equipment on the ground. Coaxial cable has a large diameter, for example, about ½ inch to ¾ inch, and is heavy, which makes installation difficult. Coaxial cable also has high power consumption. Accordingly, there is need for radio networks that are easier to install and have improved power consumption.

### SUMMARY

In some embodiments, a FTTA system comprises a multi-fiber cable configured to be operatively coupled to fiber optic equipment on the ground. The FTTA system also comprises a fiber optic demarcation unit optically coupled to the multi-fiber cable, and a multi-fiber jumper cable comprising a push-pull connector at one end configured to be optically coupled to the fiber optic demarcation unit. Additionally, the FTTA system comprises a remote radio head optically coupled to the adapter of the fiber optic demarcation unit.

The fiber optic demarcation unit may further comprise an adapter that optically couples the multi-fiber cable to the demarcation unit. The multi-fiber cable may comprise twelve fibers and the multi-fiber jumper cable may comprise two fibers.

The fiber optic demarcation unit may comprise a housing defining an environmentally sealed cavity. The housing may comprise a first housing portion and a second housing portion. The first housing portion may comprise a mounting flange configured to create an environmental seal with the second housing portion. The housing may further comprise a gasket positioned between the mounting flange and a surface of the second housing portion. The second housing portion may define an opening configured to allow a user to selectively secure the demarcation unit.

The fiber optic demarcation unit may further comprise a plurality of adapters optically coupled to the multi-fiber cable, and the first housing portion may define a plurality of ports configured to hold the plurality of adaptors. The plurality of adapters may be arranged in a cascading configuration. The demarcation unit may further comprise a bracket configured to mount the demarcation unit to a wall or a frame of a radio tower. The demarcation unit may further comprise an optical component optically coupled to the multi-fiber cable and to the multi-fiber jumper cable. The optical component may be a fanout device or a wavelength division multiplexer.

In some embodiments, a FTTA system comprises a multi-fiber cable operatively coupled to fiber optic equipment on the ground. The fiber optic demarcation unit is optically coupled to the multi-fiber cable and to a remote radio head. The fiber optic demarcation unit comprises a housing and a strain relief device attached to the housing and to the multi-fiber cable such that a load of the multi-fiber cable is transferred from an interface between the multi-fiber cable and the housing of the fiber optic demarcation unit.

The strain relief device may be attached to the multi-fiber cable, about two feet from the housing.

In some embodiments, a housing for a fiber optic demarcation unit in a fiber-to-the-antenna system comprises a first housing portion comprising a first wall, a side wall extending from an edge of the first wall, and a mounting flange extending outward from the side wall. The side wall defines a port for holding an adapter. The housing also comprises a second housing portion comprising a second wall. The first housing portion and the second housing portion are configured to be coupled to create an environmental seal.

The housing may further comprise a gasket positioned between the mounting flange and a surface of the second housing portion. The first housing portion may further comprise a first lip extending from the mounting flange, and the second housing portion may further comprise a second lip extending from the second wall, the second lip being adjacent the first lip.

### BRIEF DESCRIPTION OF THE DRAWINGS

Embodiments of the invention will now be described, by way of example only, with reference to the accompanying schematic drawings in which corresponding reference symbols indicate corresponding parts.
Fig. 1 schematically illustrates an embodiment of a FTTA system comprising a demarcation unit.
Fig. 2 is a perspective view of a first housing portion of the demarcation unit in Figure 1.
Fig. 3 is a perspective view of the demarcation unit in Figure 1.
Fig. 4A is a cross-sectional view of the demarcation unit in Figure 1 taken along line 4-4 in Fig. 1.
Fig. 4B is an enlarged view of a portion of the demarcation unit in Figure 4A.

### DETAILED DESCRIPTION

While the invention is described herein with reference to illustrative embodiments for particular applications, it should be understood that the invention is not limited thereto. Those skilled in the art with access to the teachings provided herein will recognize additional modifications, applications, and embodiments within the scope thereof and additional fields in which the invention would be of significant utility.

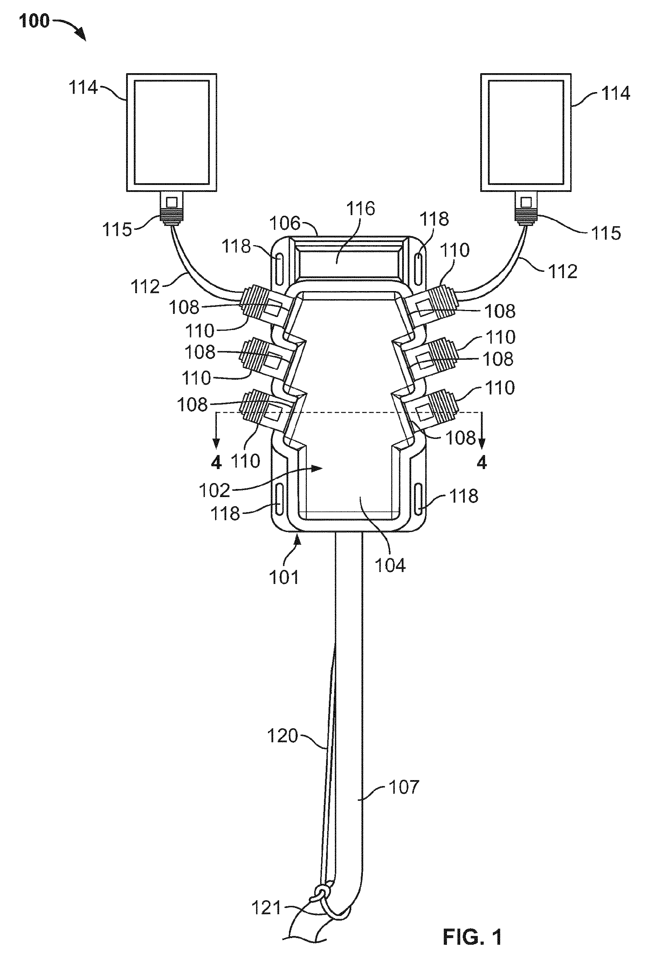

Figure 1 depicts an embodiment of a FTTA system 100. FTTA system 100 comprises a multi-fiber fiber optic cable 107, a fiber optic demarcation unit 101 optically coupled to cable 107, and one or more remote radio heads 114 optically coupled to demarcation unit 101 and, in turn, fibers of cable 107. Demarcation unit 101 can be mounted on top of a radio tower in proximity to radio heads 114. Demarcation unit 101 optically couples one or more radio heads 114 to fiber optic equipment on the ground, for example, an access terminal or electronic equipment in a ground enclosure.

Demarcation unit 101 comprises a housing 102 that encloses optical components. In some embodiments, housing 102 defines an environmentally sealed cavity for housing the optical components. Housing 102 may comprise two or more separate housing portions. For example, as shown in Figures 1-3, 4A, and 4B, housing 102 comprises a first housing portion 104 and a separate, second housing portion 106. First housing portion 104 and second housing portion 106 can be configured to be fixedly or selectively coupled together such that an environmental seal is created at the interface between first housing portion 104 and second housing portion 106.

Demarcation unit 101 is optically coupled to a multi-fiber cable 107. Cable 107 can comprise two or more fibers. For example, cable 107 can comprise twelve fibers. Cable 107 may comprise less than twelve fibers or more than twelve fibers. Cable 107 is optically coupled to fiber optic equipment on the ground, for example, an access terminal or electronic equipment in a ground enclosure proximate to the radio tower.

In some embodiments, cable 107 is fixedly coupled to demarcation unit 101. For example, cable 107 is fixedly coupled to demarcation unit 101 using a packing (PG) gland. In some embodiments, cable 107 is selectively coupled to demarcation unit 101. For example, demarcation unit 101 can comprise an adapter configured to optically couple with a connectorized end of cable 107. Cable 107 runs from the ground and vertically up a radio tower to the location of demarcation unit 101. In some embodiments, cable 107 has a diameter that ranges between about 3 mm to about 6 mm.

Demarcation unit 101 comprises one or more ports 108. As shown in Fig. 1, demarcation unit 101 comprises six ports 108. For example, as shown in Fig. 1, demarcation unit 101 comprises three ports 108 in a cascading configuration on one side of demarcation unit 101 and three ports 108 in a cascading configuration on an opposing side of demarcation unit 101. Demarcation unit 101 may comprise less than six ports 108 or more than six ports 108.

At each port 108, demarcation unit 101 can comprise an adapter 110. Each adapter 110 is optically coupled to two or more fibers of cable 107. Adapters 110 are configured to couple to a connectorized end of a jumper cable 112. Adapters 110 can be configured to create an environmental seal with the connectorized ends of jumper cables 112. For example, in some embodiments, adapters 110 can be configured to create a water-tight seal with a push-pull connector at one end of jumper cables 112. Each jumper cable 112 is optically coupled to one radio head 114. Jumper cables 112 run from demarcation unit 101 to radio head 114. The ends of jumper cables 112 opposite demarcation unit 101 can be spliced with remote radio heads 114 or can have connectors configured to optically couple to an adapter 115 of the remote radio heads 114. In some embodiments, jumper cables 112 are multi-fiber cables that each comprise two or more fibers.

In some embodiments, housing 102 defines an opening 116 configured to allow a user to handle or secure demarcation unit 101. In some embodiments, second housing portion 106 defines a rectangular opening 116 as shown in Fig. 1. In some embodiments (not shown), first housing portion 104 defines opening 116. For example, a user may clip demarcation unit 101 to the user's belt using opening 116.

In some embodiments, housing 102 defines one or more openings 118 configured to allow a fastening device to pass through. The fastening device(s) couple demarcation unit 101 to a radio tower or other desired location. As shown in Fig. 1, second housing portion 106 can define four rectangular openings 118 at the corners of second housing portion 106. Openings 118 can be configured to allow a cable tie, screw, bolt, clamp, or any other suitable fastening device to pass through.

In some embodiments, demarcation unit 101 includes a strain relief device 120. Strain relief device 120 may be a cord, cable, rope, thread, or any other suitable strain relief device. Strain relief device 120 is coupled to housing 102 of demarcation unit 101 and to a point 121 of cable 107 such that the load of cable 107 is transferred away from the interface between housing 102 and cable 107. In some embodiments, location 121 may be about two feet away from housing 102.

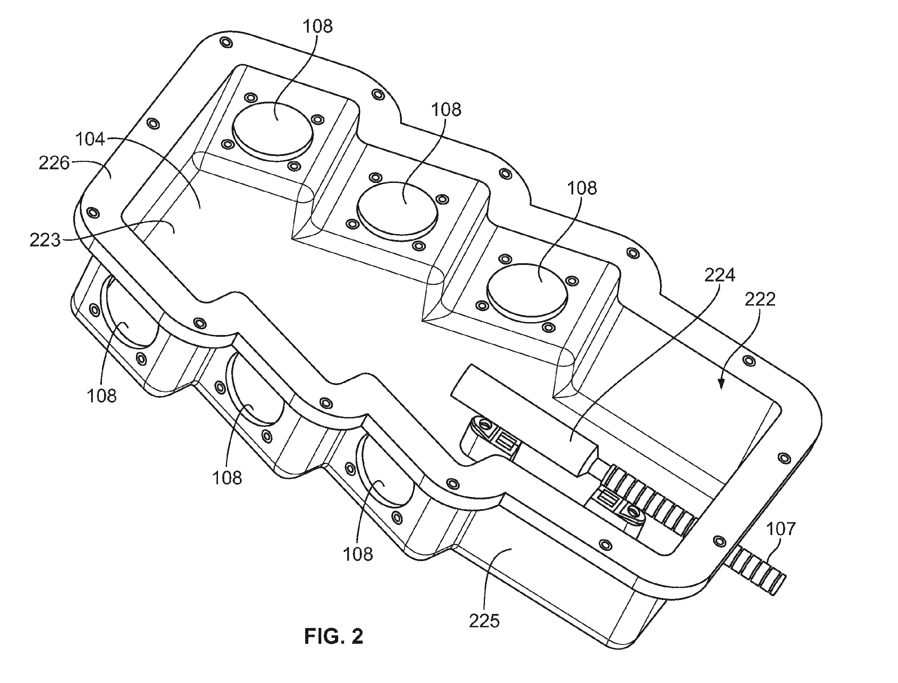

Fig. 2 depicts a perspective view of an interior of first housing portion 104. First housing portion 104 defines a cavity 222 for housing components of demarcation unit 101. As shown in Fig. 2, demarcation unit 101 can comprises an optical component 224. In some embodiments, optical component 224 can be a fanout device configured to split the fibers of cable 107 into separate fibers or smaller bundles of two or more fibers. The separated fibers or bundles of fibers can be optically coupled to adapters 110 (not shown in Fig. 2).

In some embodiments, optical component 224 can be a wavelength division multiplexer configured to split the fibers of cable 107 into separate fibers or smaller bundles of two or more fibers, each transmitting an optical signal of a different wavelength. In some embodiments, in which optical component 224 is a wavelength division multiplexer, cable 107 can include only two fibers.

First housing portion 104 comprises an outer wall 223 and side wall 225 extending from the outer wall 223. Side wall 225 defines one or more ports 108. For example, as seen in Fig. 2, side wall 225 defines six ports 108 in a cascading fashion. First housing portion 104 also comprises a mounting flange 226 extending outwardly from side wall 225. Mounting flange 226 is configured to closely correspond to a mounting surface of second housing portion 106.

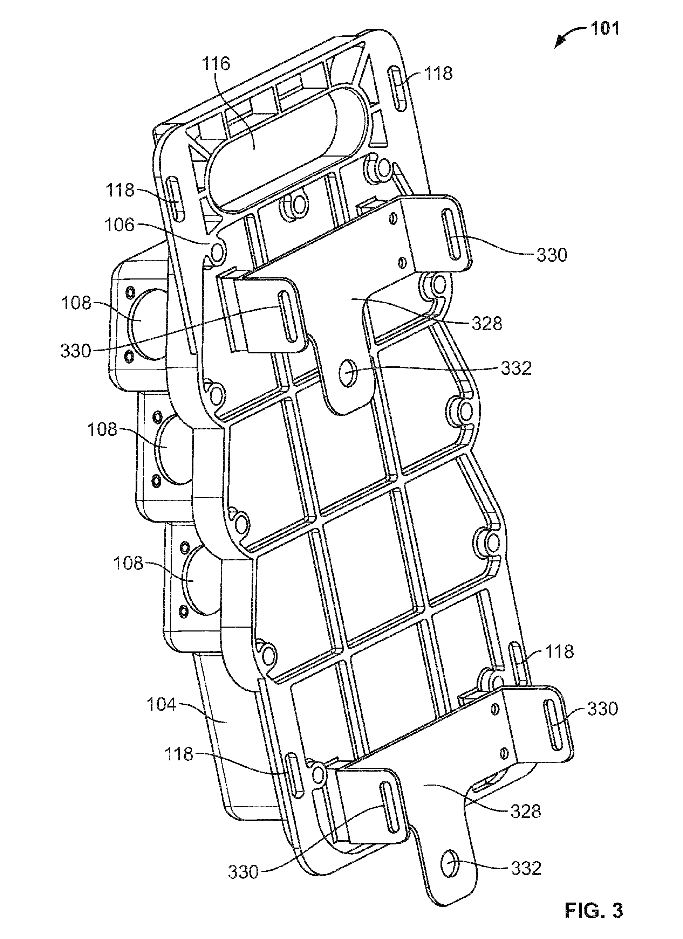

Fig. 3 illustrates another perspective view of demarcation unit 101 with first housing portion 104 coupled to second housing portion 106. Demarcation unit 101 can include one or more mounting brackets 328. Mounting brackets 328 can be configured for a wall mount or coupling to a frame of a radio tower. As shown in Fig. 3, demarcation unit 101 comprises two mounting brackets 328. Demarcation unit 101 may comprise one mounting bracket 328 or more than two mounting brackets 328. Each mounting bracket 328 defines one or more slots 330, for example, two slots, for receiving a fastening device that couple demarcation unit 101 to a wall or frame. Each mounting bracket 328 can define one opening 332 for coupling directly to strain relief device 120.

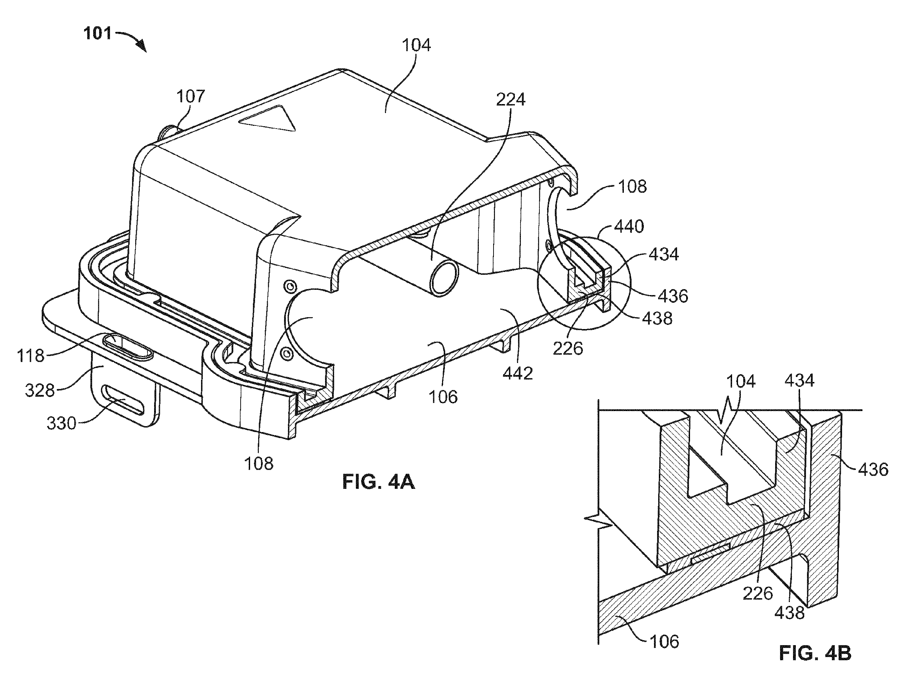

Fig. 4A is a cross-sectional view of demarcation unit 101 taken along line 4-4 in Fig. 1, and Fig. 4B is an enlarged view of portion 440 in Fig. 4A. First housing portion 104 and second housing portion 106 can be configured to couple together to form an environmental seal. In some embodiments, demarcation unit 101 comprises a gasket 438. Gasket 438 is spaced between first housing portion 104 and second housing portion 106 to substantially prevent fluid flow between the interface of first housing portion 104 and second housing portion 106. Gasket 438 is adjacent mounting flange 226 of first housing portion 104, and a surface 442 of second housing portion 106. As best seen in Fig. 4A, mounting flange 226 is substantially parallel to surface 442 of second housing portion 106. First housing portion 104 can also comprise a lip 434 that extends from a distal edge of mounting flange 226 in a direction away from surface 442 of second housing portion 106. Second housing portion 106 can also comprise a lip 436 that extends from a distal edge of surface 442 of second housing portion 106 in a direction generally parallel to lip 434 of first housing portion 104. In some embodiments, lip 436 of second housing portion 106 helps create the environmental seal between first housing portion 104 and second housing portion 106.

While an illustrative embodiment of the invention has been described above, it is, of course, understood that various modifications will be apparent to those of ordinary skill in the art. Such modifications are within the spirit and scope of the invention, which is limited and defined only by the appended claims.

## Claims

1. A fiber-to-the-antenna (FTTA) system comprising:
a multi-fiber cable configured to be operatively coupled to fiber optic equipment;
a fiber optic demarcation unit optically coupled to the multi-fiber cable;
a multi-fiber jumper cable having a push-pull connector at one end portion configured to be optically coupled to the fiber optic demarcation unit; and
a remote radio head optically coupled to the fiber optic demarcation unit.

2. The FTTA system of claim 1, wherein the fiber optic demarcation unit further comprises an adapter that optically couples the multi-fiber cable to the demarcation unit.

3. The FTTA system of claim 1 or 2, wherein the multi-fiber cable comprises twelve fibers, and wherein the multi-fiber jumper cable comprises two fibers.

4. The FTTA system of any preceding claim, wherein the fiber optic demarcation unit comprises a housing defining an environmentally sealed cavity.

5. The FTTA system of claim 4, wherein the housing comprises a first housing portion and a second housing portion.

6. The FTTA system of claim 5, wherein the first housing portion comprises a mounting flange configured to create an environmental seal with the second housing portion.

7. The FTTA system of claim 6, wherein the housing further comprises a gasket positioned between the mounting flange and a surface of the second housing portion.

8. The FTTA system of claim 5, wherein the fiber optic demarcation unit further comprises a plurality of adapters optically coupled to the multi-fiber cable, and wherein the first housing portion defines a plurality of ports configured to hold the plurality of adaptors.

9. The FTTA system of claim 8, wherein the plurality of adapters are arranged in a cascading configuration.

10. The FTTA system of claim 5, wherein the second housing portion defines an opening configured to allow a user to selectively secure the demarcation unit.

11. The FTTA system of claim 5, wherein the demarcation unit further comprises a bracket configured to mount the demarcation unit to a wall or a frame of a radio tower.

12. The FTTA system of any preceding claim, wherein the demarcation unit further comprises an optical component optically coupled to the multi-fiber cable and to the multi-fiber jumper cable, wherein the optical component may be a fanout device or a wavelength division multiplexer.

13. A fiber-to-the-antenna (FTTA) system comprising:
a multi-fiber cable operatively coupled to fiber optic equipment; and
a fiber optic demarcation unit optically coupled to the multi-fiber cable and configured to be coupled to a remote radio head, the fiber optic demarcation unit comprising a housing and a strain relief device attached to the housing and to the multi-fiber cable such that a load of the multi-fiber cable is transferred from an interface between the multi-fiber cable and the housing of the fiber optic demarcation unit.

14. A housing for a fiber optic demarcation unit in a fiber-to-the-antenna system, comprising:
a first housing portion comprising a first wall, a side wall extending from an edge of the first wall, and a mounting flange extending outward from the side wall, the side wall defining a port for holding an adapter; and
a separate second housing portion comprising a second wall,
wherein the first housing portion and the second housing portion are configured to be coupled to create an environmental seal.

15. The housing of claim 14, further comprising a gasket positioned between the mounting flange and a surface of the second housing portion.

16. The housing of claim 14, wherein the first housing portion further comprises a first lip extending from the mounting flange, and wherein the second housing portion further comprises a second lip extending from the second wall, the second lip being adjacent the first lip.
